(19) Europäisches Patentamt
European Patent Office
Office européen des brevets

(11) **EP 3 608 579 B1**

## (12) EUROPEAN PATENT SPECIFICATION

(45) Date of publication and mention
of the grant of the patent:
**12.07.2023 Bulletin 2023/28**

(21) Application number: **18781759.8**

(22) Date of filing: **06.04.2018**

(51) International Patent Classification (IPC):
**F16L 59/14** *(2006.01)*  **F16L 59/02** *(2006.01)*

(52) Cooperative Patent Classification (CPC):
**F16L 59/028; F16L 59/14**

(86) International application number:
**PCT/RU2018/000222**

(87) International publication number:
**WO 2018/186773 (11.10.2018 Gazette 2018/41)**

(54) **VERSTÄRKTE BEWEGLICHE WÄRMEDÄMMUNG**

VERSTÄRKTE BEWEGLICHE WÄRMEDÄMMUNG

ISOLATION THERMIQUE ARMÉE AMOVIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.04.2017 RU 2017111880**

(43) Date of publication of application:
**12.02.2020 Bulletin 2020/07**

(73) Proprietor: **Public Joint Stock Company
"Machine-Building Plant "Ziopodolsk"
142103 Podolsk, Moscow Region (RU)**

(72) Inventor: **KRAINOV, Boris Vladimirovich
Podolsk
Moskovskaya obl. 142103 (RU)**

(74) Representative: **Friese Goeden Patentanwälte
PartGmbB
Widenmayerstraße 49
80538 München (DE)**

(56) References cited:
**GB-A- 2 039 829    RU-C1- 2 259 510
RU-C1- 2 493 473    RU-C2- 2 229 654
RU-C2- 2 582 034    US-A- 3 415 408
US-A- 3 970 210**

## Description

The invention relates to thermal insulation technology, and more specifically to the reinforced removable thermal insulation as defined in claim 1.

From the achieved state of art, a prefabricated thermal insulation structure is known, comprising a tightly covering pipeline, a cylindrical shell of sequentially arranged along its length and interconnected sections, each of which is made of docked and interconnected N-thermal insulation elements with a cross section in the form of an annular sector (see patent RU - UI - N° 40433, 2004).

Blocks made of fibrous material of rectangular or semi-cylindrical form obtained by gluing together the layers of ceramic fibers using glue are known. Such insulating blocks are fixed to the wall surface of the furnace so that the glued surface between the neighboring layers of protective ceramic fiber coating were perpendicular to the wall surface (patent on invention Great Britain No. GB 2039829 IPC B32B 19/04, 19/06, date of publication 20.08.1980).

The tank with thermal insulation for low temperature fluids consisting of foamed insulation layer fixed to the inner surface of the tank wall which is insulated, multitude of conductors in the layers, assembled criss-cross in the form of a lattice and implemented in the insulation and layer not penetrable for the fluid or wall, which covers the inner surface of the insulation (US patent on invention No. US 3970210, IPC F16L 59/14, F17C 13/00, date of publishing 20.07.1976) is known.

US 3 415 408 A discloses a reinforced removalbe thermal insulation according to the preamble of claim 1. The object of the invention is achieved by a reinforced removalbe thermal insulation with the features of claim 1. Preferred embodiments of the invention are disclosed in the dependent claims.

GIDROPRESS OKB, ZiO-Podolsk PJSC (g. Podolsk, Moscow region) in cooperation with the German company "KAEFER" developed and implemented modular removable thermal insulation (BSTI) for Tianwan NPP units (China) and for Kudankulam NPP units (India). Fastening of BSTI on the equipment and pipelines is carried out by means of the special tension locks in advance established on blocks - about 60%, and the other - 40% of the locks are fastened by means of welding on installation of BSTI.

BSTI is a box made of austenitic steel. The cavity of the box is filled with heat-insulating material. Mats made of glass or basalt staple fiber are used as heat-insulating material. The heat-insulating material is fixed inside the box with special pins and clips to prevent any movement. After laying the heat-insulating material, the box is closed with holed stainless foil, which is welded on the inside of the block

All elements of the block are fastened to each other by contact welding.

The blocks have the ability to replicate the surface of the heat-insulated equipment.

However, the relatively thick-walled steel of the BSTI box (1.0 mm and 0.5 mm), which is due to the strength characteristics in view of the large dimension of the blocks and the fastening of a large number of tight tension screws on their surface, leads to irrational use of steel and heat-insulating material.

The ratio of weight of heat-insulating material to the weight of BSTI blocks is 31,3% (19 tons-heat-insulating material and 41,7 tons of steel) that leads to a conclusion about the irrational presence of steel (68,7%) in a heat-insulating design of the blocks.

The presence of tight tension screws on the surfaces of the blocks leads to a large thickness of the box steel and to the occurrence of moments of forces that, due to bending moments, tend to unscrew the blocks and open the clearances of the blocks surfaces facing the heat-insulated surface, which can lead to an additional increase in temperature and deterioration of the heat insulating properties of the BSTI.

The invention, which discloses the removable thermal insulation containing the longitudinal side wall (10, 26) between the thermal insulation block adjoining other thermal insulation blocks and boxes made of stainless steel and filled with thermal insulating material (32), beside the box is made in the form of a connection comprising of a strong reinforced frame mesh (14/16/) and a thin-walled stainless steel cladding forming the block. The reinforcement bars may be executed with three, four, five and hexagonal cell blocks secured to each other (US patent on invention US 341540, publishing date 10.12.1968)

The invention is aimed at solving the problem of reducing the weight of stainless steel thermal insulation blocks and creating guaranteed minimum gaps of the side surfaces of the blocks that shield the thermal discharge of the equipment.

The problem is solved by the fact that the box is made in the form of a connection consisting of a strong reinforcing frame grating and a thin-walled stainless steel facing sheet, forming a block of ASTI, while the reinforcing grating can be made with three -, four -, five- and hexagonal cell blocks ASTI are attached to each other by means of locks-latches installed in the corner junctions of external and internal grounds mating among themselves, units of ASTI consisting of portable and stationary grips cameras of hooks placed inside the ASTI blocks made in the form of curved flexible and elastic plates of the gripper with the possibility of compression, each hook is made in the form of stamped walls, fixed to the frame of the unit with the stiffeners and stainless plate, wall hook sections form a plane, mutually contacting at docking with a surface of elastic plates of capture with the rounding placed coaxially of a line of joints of corners of lateral walls, and the captures are connected among themselves by the ring spring fastened with elastic plates of capture and connecting them symmetrically concerning an axis of symmetry of captures with formation of the flexible compensated tightness.

The proposed design of the lock-latch with an annular spring allows for reliable contact of the surfaces of the ASTI blocks due to guaranteed tightness in the inaccessible inner part of the touching side faces of the blocks to ensure their tight fit with each other. For further clarity, we define that the inaccessible base of the block facing the heat insulated surface is taken as the inner base of the heat-insulating block, and a colder serviced base of the heat insulating block is considered the outer base.

Thus, the patented reinforced removable thermal insulation (ASTI) including a latch lock with guaranteed interference has the following differences from the prototype:

    1. Heat-insulating blocks capable to save weight of corrosion-proof metal of heat insulation, to increase durability of heat-insulating blocks as much as possible to exclude disclosure of thermal gaps between lateral sides of the heat-insulating blocks from inaccessible internal bases of heat insulation.

    2. Increased thermal insulation reliability achieved by reliable contact of the side faces of thermal insulation blocks due to the use of guaranteed tightness between the hooks of thermal insulation blocks and grips of locks-latches with guaranteed tightness.

Placing hooks in the corners at the intersection of the ASTI block side faces in the factory excludes numerous adjustment work and welding ~ 6400 tension screws on the surface of the BSTI blocks, installed in place during assembly and assembly work on the equipment.

When placing the hooks inside the ASTI heat-insulating blocks, there is no deformation of the hooks during transportation of detachable heat-insulating blocks in space-limited conditions during initial installation, dismantling, operation, as well as during routine inspections and tests of the metal of the heat exchange surfaces of nuclear power plants, the design is simplified and the number of tension locks is halved.

In the future, the invention is illustrated by specific examples, which, however, are not the only possible, but clearly demonstrate the possibility of achieving the above technical results by the patented set of essential features.

    Fig. 1 shows the component parts of the frame, made of stainless steel lattice with square cells.

    Fig. 2 shows the component parts of the frame with ribbed washers installed in the crosshairs of the lattice.

    Fig. 3 shows the frame parts of the thermal insulation block, lined with a thin stainless steel sheet with an allowance on the perimeter, and welded by contact welding to the shelves of corrugated washers.

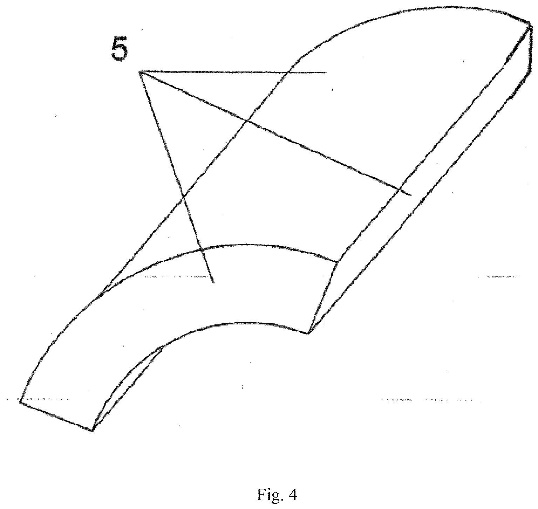

    Fig. 4 shows a hollow ASTI block assembled and welded by contact welding on allowances of a facing sheet without heat insulation and without the final inner base made of a stainless steel holed sheet.

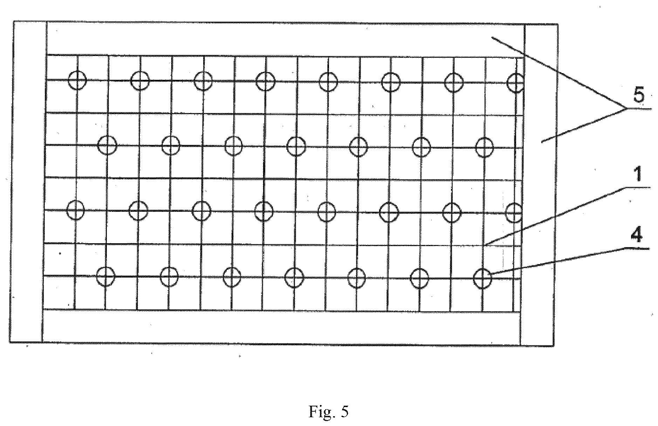

    Fig. 5 shows a hollow ASTI block from the side of the inner base.

    Fig. 6 shows a ribbed washer.

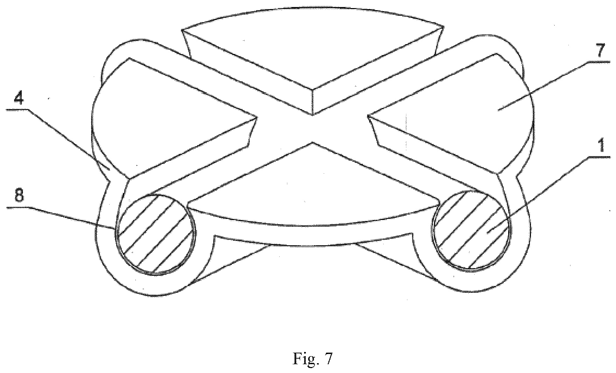

    Fig. 7 shows a solidview of a ribbed washer.

    Fig. 8 shows a latch lock gripper.

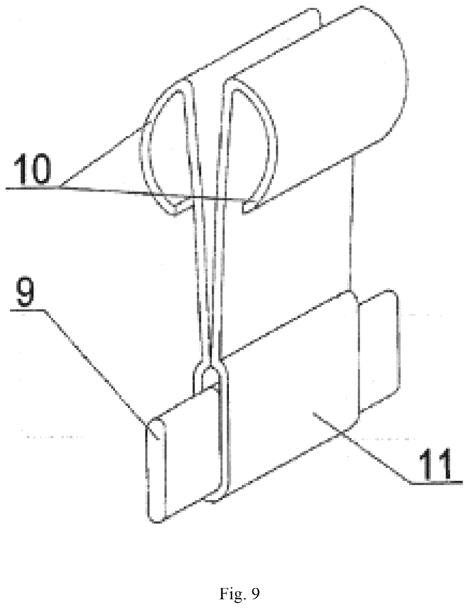

    Fig. 9 shows a solidview of a latch lock gripper.

    Fig. 10 shows a solidview of a latch lock hook, fixed on a triangular plate.

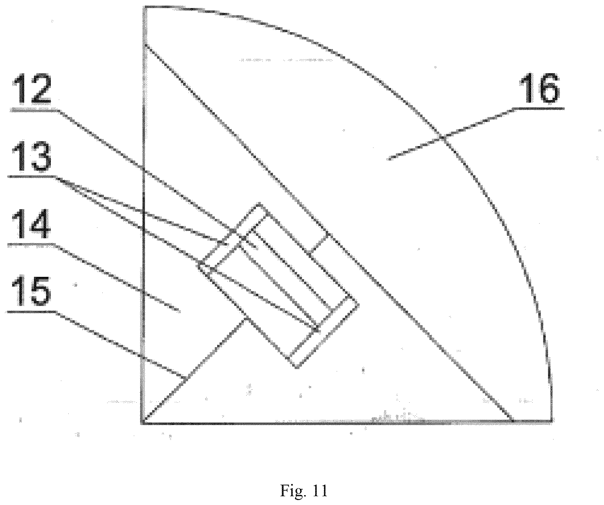

    Fig. 11 shows a top view of the hook attached to the ASTI block.

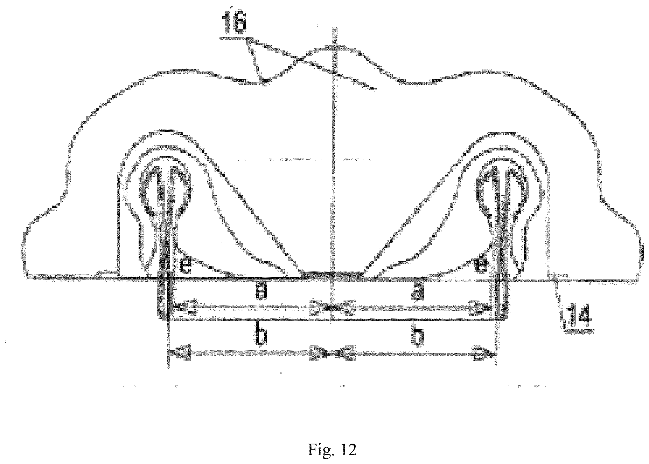

    Fig. 12 shows the joining of heat-insulating ASTI blocks and their fixation with a latch lock.

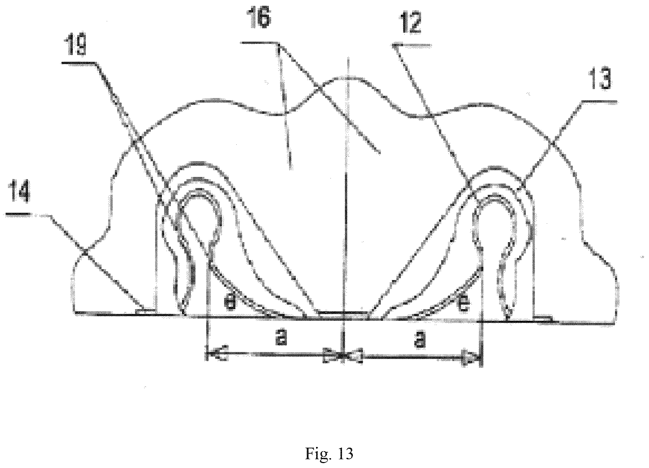

    Fig. 13 shows the hooks mounted on the blocks.

    Fig. 14 shows a block frame made of a lattice with a profile reinforcement of one bar and a second bar-strip, connected by a contact method.

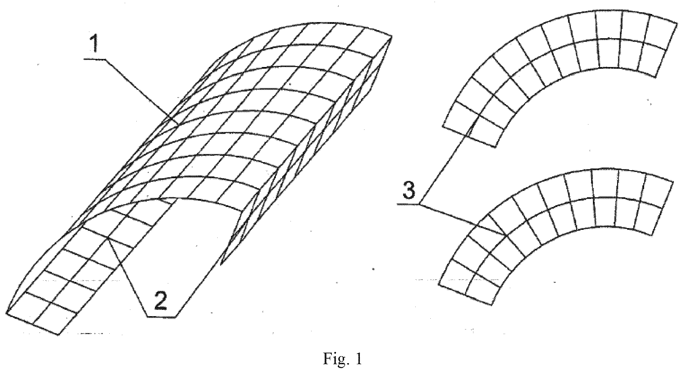

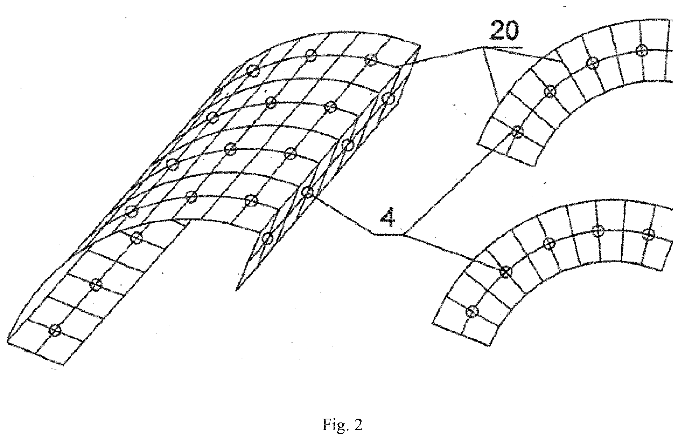

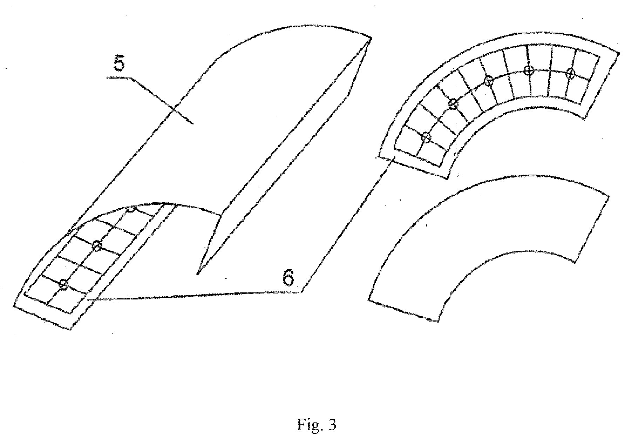

The patented reinforced removable thermal insulation (ASTI) contains heat insulation blocks joined by longitudinal lateral walls between each other in close contact to each other. The blocks include boxes made of stainless steel and filled with heat insulating material. ASTI consists of a cylindrical part of the frame lattice 1 with side walls 2 and front walls 3 (Fig. 1)made of stainless stamped grooved washer 4 (Fig. 2) with shelves 7 for contact welding, gutter 8 and a stainless thin-walled steel shell with a thickness of 0.1 -0.4 mm -5 on (Fig. 3).

For convenience and clarity of the image, the initial state of reinforcing lattice is selected that with square cells and a circular section of the bar, completely flat on both sides. However, it can be made with a triangular, pentagonal, hexagonal and rectangular cell and a different cross-section of the bar (20). It is preferable to use a lattice with a circular cross-section of the bar.

The stainless steel reinforcing frame lattice can be pre-bonded to the stainless facing sheet by electric welding without ribbed washers.

Bars of the reinforcing frame lattice 20 (Fig. 2) can be made of a material other than stainless steel and having a different shape, but, in terms of strength, not inferior to the strength of stainless steel bars and connected to the stainless facing sheet using ribbed washers.

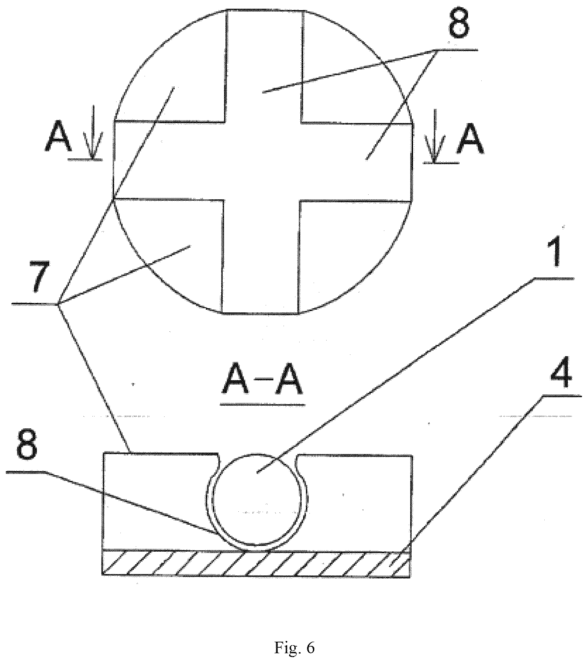

The ribbed washers 4, made by stamping, have a design that allows, when assembled with cross nodes of the reinforcing lattice, to be stiffly fixed and installed with the ledges 7 (Fig. 6) flush with the lattice plane. For this, the inlet part of the grooves 8 (Fig.6) has a slight narrowing. Ledges 7 (Fig.6) are used for contact welding of ribbed washers with a thin-walled steel shell of the block. With a reinforcing frame lattice of small curvature, which is typical for heat insulation of equipment of big diameters, the ribbed washers are practically flat; but with small diameters of heat-insulated pipelines when stamping the ribbed washers, the curvature of the pipeline surface shall be taken into account.

After mounting the ribbed washers on the reinforcing lattice, the lattice and stainless metal thin-walled steel shell are bent according to a template similar in geometric shape and dimensions to the block of the BSTI prototype. In addition, the stainless metal thin-walled steel shell is selected with the relevant allowance 6 (Fig. 3) along the perimeter. After the assembly of the structure, installation of hook 12 and contact welding on the allowances of the cladding sheet, the cavity block ASTI 16 (Fig. 1) shall be filled with heat-insulating material, and then the corrosion-resistant sheet shall be secured by means of contact welding on the allowances.

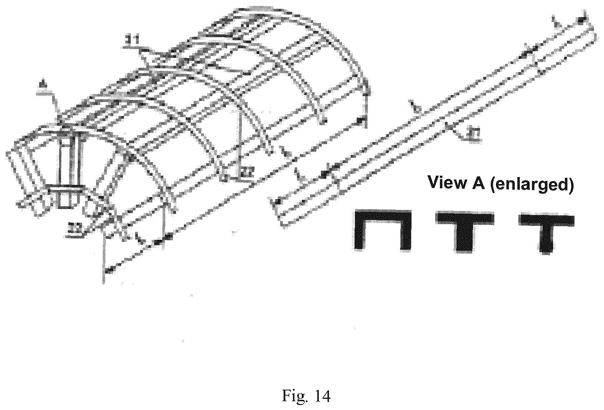

Variant of application as part of the frame lattice reinforced profile of the bar-channel, brand and other profiles, 21 (Fig. 14), connected to the bar-strip 22, which allows with minimal effort to make bends of the lattice and connect the bars with the use of profile corrugated washers with the shape of troughs corresponding to the shape of the frame lattice, allows to assemble the bearing frame of ASTI unit in a unified manner for thermal insulation of any curvature of equipment surface without the use of additional structural parts. The frame reinforcing lattice can be made of a reinforced bar shape of various modifications. Such a lattice with the relevant pitch d of the reinforcement bar shape and linear sizes of the mesh $l_1$ and $l_2$, where $l_1$ is the height of the radial bar of the front lateral surface of the frame of the block, coinciding with the thickness of the thermal insulation layer of the block minus two thicknesses of the cladding steel, and $l_2$ is the linear length of the block of ASTI, parallel to the axis of the insulated body or pipeline. By executing the cross-section of the reinforcing seat of the section (U-sections, T-beam, etc.) at size boundary $l_1$ and $l_2$, bending the section band at an angle of 90° on this boundary, and connecting the cut seats of the section in between by the contact method, we shall get the frame of the front lateral surface of the block. To obtain the final front lateral surface, it is necessary to cut appropriately the strips of the lattice 22, which connect the radial billets of the reinforced bar, to bend the lattice along the outer surface in accordance with the required curvature of the DRHI block and fix the cut lattice strips to each other by a contact method, thus obtaining the front lateral surface of the block frame. The same should be done with the front lateral surface from other side of the block. Having bent the strips of the frame lattice at the required angle, we obtain two adjacent side surfaces adjoining the front lateral surfaces, which are then connected with each other fixing the entire side surface of the block frame.

The design of the frame lattice with bars different in shape, which allows to make the supporting frame of the ASTI block of any curvature, leaves the calculated cells of the outer surface of the frame constant and same in pitch and dimension, reducing, conservatively, the margin of safety, the pitch and dimensions of the cell of the inner surface of the ASTI block frame. This design creates a predetermined unification of the supporting frame of almost any ASTI block.

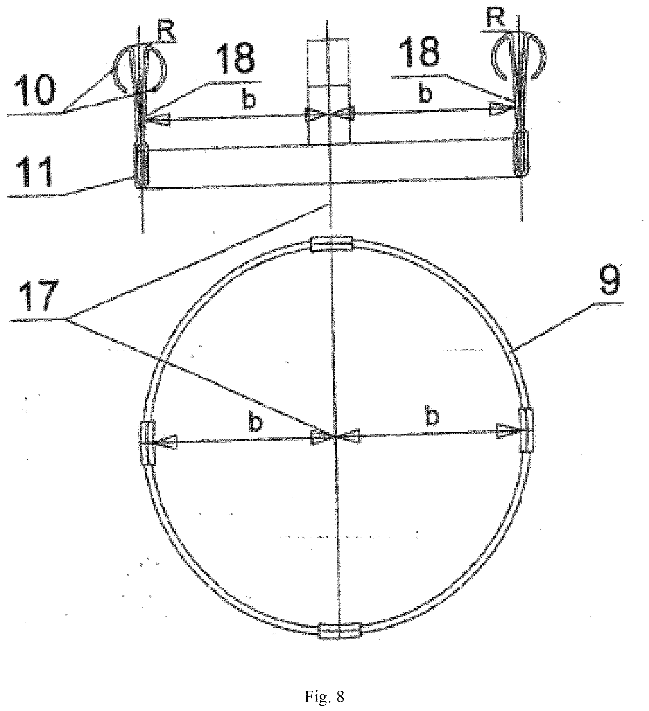

The lock-latch consists of a fixed part - a hook 12 and a portable part ~ of the grip 10, 11 , 18 (Fig.8). The lock-latch at the intersections of the blocks ASTI, that is one lock on one intersection or one lock on a single block of ASTI.

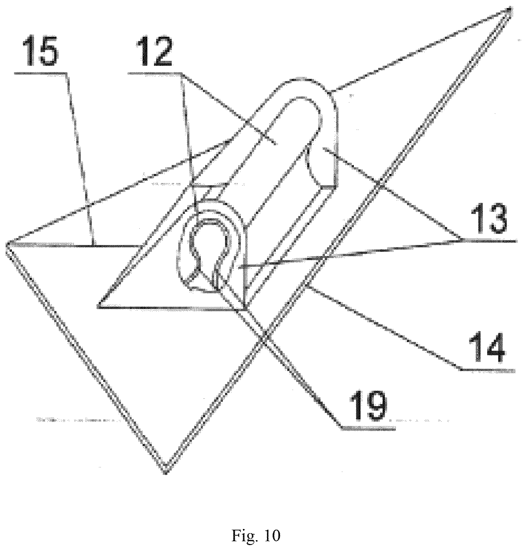

The hook 12 (Fig.10) is made of a stamped profile and by means of stiffeners 13 and argon-arc welding is attached to a triangular plate 14 perpendicular to its bisector 15 of a right angle. Then, before filling the hollow block ASTI with heat-insulating material, using argon-arc welding, the hook is attached to the frame and the welded on allowances of the block lining. It should be noted that, with small dimensions of the hook (25mm in height and 20 x 30mm in width and length), after mounting it from above, it is necessary to install additional local heat insulation.

Size a is the bisector distance from the top of the corner to the near wall (19) folds of the camera hook, which is the interaction of the surface of the elastic wall of the capture 18. This distance is a constant dimension.

Size b is the distance from the axis of symmetry of the grips 17 to the surface of the elastic wall of the grip 18, interacting with the wall of the hook chamber. This is a variable dimension arising from the cross section torsion and the elastic tension of the annular spring 9. Size c is the distance of guaranteed tightness considered in statics to the interaction (docking) of the grip and the hook.

Size c = a-b - guaranteed tension compensated during the interaction (docking) of the grip and the hook due to deformation of the annular spring, forming a flexible feedback during thermal expansion or cooling of the heat of the insulated body. The size c is obtained by docking as a result of the slip of the petals of the capture 10 (Fig. 8) with rounding radius along the inclined plane e of the hook chamber and the interaction of the surface of the elastic gripping wall with the wall of the hook chamber.

An annular spring 9, shown in Fig. 8, passing through the bases (Fig. 8) of the grippers and serving to tension the grippers and create a stable stiffness of the assembly of the grippers with a spring, can be flat, cylindrical or otherwise, with or without connector. In the normal mode, the grip tension occurs due to the emerging elastic deformations: bending of gripper plates, elastic torsion, and straithening of the arcs of the one-piece spring between the bases of a gripper of the DRHI blocks, since the chord is always less than the length of the arc of the circle connecting the chord. In the design of the latch lock with three grippers in ultimate tension, the one-piece spring takes the shape of a triangle, for the latch lock with four grippers, the one-piece spring takes the shape of a square or rectangle, and so on.

Due to the compensated guaranteed flexible tightness, tight contact and fixation of the side edges of the ASTI heat-insulating blocks is provided, forming a flexible feedback during temperature fluctuations of the heat-insulated surface of the equipment.

The inclination angle of the plane e of the hook chamber depends on the coverage angle of the surface of the ASTI block of heat-insulating surface.

DRHI blocks are attached to each other with the help of latch locks, installed at the corner intersections of blocks, that are joined from the outer and inner bases of the blocks. The fixed part, called a hook, is installed inside the block from the inside and with the help of stiffeners 13 and on the bisector of the right angle 15 of the triangular plate 14 before filling the hollow ASTI block; using argon-arc welding, the hook is attached to the frame and welded on allowances of the block lining.

The hook chamber has flaps 19 passing through which , when joining, petals 10 and the surface of the elastic wall 18 fix the movable hook relative to the first ASTI block. The movable grip contacts the bases with the heat-insulated surface of the body. After its docking with the hook, a 3~5mm isothermal thermal gap occurs between the heat-insulated body and the ASTI blocks, eliminating local temperature stresses on the surface of the body. The second block, joined with the gripper of the same latch lock, repeats the previous operation. In the same way, the third and fourth blocks are joined with one latch lock. The fifth, sixth and so on ASTI blocks are joined identically. Closing around the perimeter of the cylindrical part of the pipeline or cylindrical apparatus ASTI blocks form a closed chain of blocks, self-retaining them on the heat-insulated surface.

If the lock latch is installed from the outer base of the ASTI blocks, i.e. the lock-latch moves to the removable thermal insulation blocks to fix them, then the hook chamber inclined plane e becomes vertical. In this case, all the arguments about the size of *a* and *b*, as well as the size of c remain the same.

When using a reinforced steel grating with a bar diameter of 2mm (for comparison - the thickness of stainless steel box of BSTI is equal to 1mm) and a square cell of pitch of 60 mm, a steel shell thickness of 0.2 mm, corrugated washers thickness of 0.5 mm, a diameter of 15 mm obtained blocks ASTI of the following data:
The thickness of the BSTI stainless thin-walled steel shell is

$$S_1 = k_1 D \sqrt{P} / [\sigma]$$

The thickness of ASTI stainless thin-walled steel shell is equal to

$$\frac{S_1}{S_2} = \frac{k_1 D \sqrt{P} / [\sigma]}{k_2 d \sqrt{P} / [\sigma]} = \frac{k_1 D}{k_2 d}$$

canceling out radicals, we find that

$$S_2 = \frac{S_1 k_2 d}{k_1 D} = \frac{1,0 \cdot 0,56 \cdot 60}{0,43 \cdot 1000} = 0,078 \, mm$$

where:

d is the pitch of cell of the ASTI block frame reinforcing lattice,
D is the maximum dimension of the BSTI block shell;
$S_1$ and $S_2$, respectively, are the thicknesses of stainless thin-walled steel shells of BSTI and ASTI;
k1 and k2-coefficients that take into account the method of fixing the edge of facing steel shells (Standard for strength calculation of equipment and pipelines of nuclear power plants. PNAE G-7-002-86. Moscow, 1989). The formulas for calculating the thickness of the shells ASTI and BSTI are taken conservatively in stock, as for a flat bottom working under a small external pressure, which most realistically displays the geometry and modes of operation of the blocks;

Given the thickness of the outer base BSTI equal Si= 1.0 mm, ki=0.56, D=1000 mm, $k_2$=0.43, t=60 mm will receive prior strength equal to the thickness of the thin-walled stainless steel shell $S_2$=0.78 mm. Taking the thickness of the stainless thin-walled steel shell to be 0.2 mm, we obtain a safety factor equal to 2.56, that is, the ASTI block shell is 2.56 times stronger than the BSTI shell. According to the calculations of bending moments, the factor of safety is even higher, since the linear dimensions in the formulas are included in square ratios.

When calculating the weight of ASTI blocks, a reinforcing steel lattice with a square cell with a pitch of 60 mm and a grating bar diameter of 1.2 mm wa taken as an example.

The calculated weight of the stainless steel BSTI blocks is 41.7 tons.

The calculated weight of stainless steel ASTI blocks is 15.0 tons.

The saving of stainless steel is 26.7 tons.

The weight of the thermal insulation material in both the options is 19.0 tons.

The relative percentage of the share of thermal insulation material in BSTI blocks is 31.3%, the share of stainless steel is 68.7%.

The relative percentage of the share of thermal insulation material in ASTI blocks is 55.9%, the share of stainless steel is 44.1%.

The saving of stainless steel is 64.0%.

The estimated cost of ASTI blocks will be at least two times cheaper.

Taking into account the use of ribbed steel washers for fastening the reinforcing frame lattice to the facing thin-walled steel by means of contact welding, it is possible to successfully replace the steel of the reinforcing lattice bar with a non-metallic material with a larger cross-section of bars, but equal in cross-section strength, which will lead to even greater savings stainless steel. This issue is not considered in more detail in this application.

## Claims

1. Reinforced removable thermal insulation (ASTI) containing heat-insulating blocks of a modular removable thermal insulation (BSTI) connected closely together by longitudinal side walls and casings made of stainless steel and filled with thermal insulating material wherein the casings are made in form of a connection comprising a strong reinforcing frame grid (1) and thin-walled stainless steel cladding sheet (5) ,thus forming a block of the ASTI, wherein the reinforcing frame grid (1) can be made with triangular, rectangular, pentagonal and hexagonal cell blocks, **characterized in that** the ASTI blocks are attached to each other by means of snap-locks installed in the corner intersections of outer and inner bases of mating ASTI blocks, and comprising portable grips (10) and stationary grips retainer hooks (12) placed inside the ASTI blocks, the grips (10) are made in the form of curved flexible and elastic compressible plates of the grip (10), each retainer hook (12) is made in the form of stamped walls fixed to the frame of the block with stiffeners (13) and a stainless plate (14), retainer hook walls form shutters (19) with the plane mutually contacting when docking with the surface of the elastic compressible plates of the grip (10) with a rounding placed coaxially to a line of joints of corners of the block's lateral walls, and the grips (10) are interconnected by a ring spring (9) which is attached to the elastic compressible plates of the grip (10) and connects them symmetrically to the axis of symmetry of the grips (10) to form a compensated flexible interference.

2. Reinforced removable thermal insulation (ASTI) according to claim 1, **characterized in that** the steel lining sheet is made of thickness $S_2$, satisfying the ratio:

$$S2 > \frac{S_1 k_2 d}{k_1 d}$$

where:

d is the pitch of cell of the frame reinforcing grid ,
$S_1$ is the thickness of the stainless steel of the BSTI block casing,
$S_2$ is the thickness of the stainless steel facing sheet of the ASTI block,
$k_1$ is the coefficient taking into account the method of fixing the edge of the BSTI casing plate,
k2 is the coefficient, taking into account the method of fixing the edge of the ASTI facing sheet,
D is the maximum size of the BSTI block.

3. Reinforced removable thermal insulation (ASTI) according to any of the preceding claims, **characterized in that** the grid (1) is made of bars with a diameter of 0.2 - 0.5 mm.

4. Reinforced removable thermal insulation (ASTI) according to any of the preceding claims, **characterized in that** the grid (1) is made of bars (20) of circular cross-section or equivalent strength bars of another profile (21).

5. Reinforced removable thermal insulation (ASTI) according to any of the preceding claims, **characterized in that** the connection of the casing is additionally provided with stamped corrugated washers (4) with troughs (8) with a tapered input for docking with the intersections of the reinforcing bars of the grid (1), which is contact welded to the thin-walled stainless steel cladding sheet (5) with its corrugated washers (4) fillets.

6. Reinforced removable thermal insulation (ASTI) according to claim 5, **characterized in that** the corrugated washers (4) are connected to the thin-walled stainless steel cladding sheet (5) by contact welding.

7. Reinforced removable thermal insulation (ASTI) according to any of the preceding claims, **characterized in that** the reinforcing grid (1) is connected to the cladding sheet by electric welding without corrugated washers.

8. Reinforced removable thermal insulation (ASTI) according to any of the preceding claims, **characterized in that** the reinforcing frame grid (1) includes one reinforced section of the grid bar (20) arranged with the linear dimension parallel to the axis of the cylindrical surface of the thermal insulation equipment and having a fixed connection to contact the band bar (22).

**Patentansprüche**

1.  Verstärkte abnehmbare Wärmedämmung (ASTI), die wärmedämmende Blöcke einer modularen abnehmbaren Wärmedämmung (BSTI) enthält, die durch Längsseitenwände und Umhüllungen aus rostfreiem Stahl eng miteinander verbunden und mit wärmedämmendem Material gefüllt sind, wobei die Umhüllungen in Form einer Verbindung ausgeführt sind, die ein starkes verstärkendes Rahmengitter (1) und ein dünnwandiges Verkleidungsblech (5) aus rostfreiem Stahl umfasst, wodurch ein ASTI-Block gebildet wird, wobei das verstärkende Rahmengitter (1) mit dreieckigen, rechteckigen, fünfeckigen und sechseckigen Zellenblöcken ausgeführt werden kann,

    **dadurch gekennzeichnet, dass** die ASTI-Blöcke mittels Schnappverschlüssen aneinander befestigt sind, die in den Eckschnittstellen der äußeren und inneren Basen von zusammenpassenden ASTI-Blöcken installiert sind und die ortsbewegliche Griffe (10) und ortsfeste Griff-Haltehaken (12) umfassen, die im Inneren der ASTI-Blöcke angeordnet sind, die Griffe (10) in Form von gekrümmten, flexiblen und elastischen, komprimierbaren Platten des Griffs (10) ausgeführt sind, jeder Haltehaken (12) in Form von gestanzten Wänden ausgeführt ist, die am Rahmen des Blocks mit Aussteifungselementen (13) und einer rostfreien Platte (14) befestigt sind, Wände des Haltehakens Klappen (19) bilden, wobei deren Ebene beim Andocken an die Oberfläche der elastischen, komprimierbaren Platten des Griffs (10) mit einer Abrundung, die koaxial zu einer Verbindungslinie der Ecken der Seitenwände des Blocks angeordnet ist, miteinander in Kontakt kommen, und die Griffe (10) durch eine Ringfeder (9) miteinander verbunden sind, die an den elastischen, komprimierbaren Platten des Griffs (10) befestigt ist und diese symmetrisch zur Symmetrieachse der Griffe (10) verbindet, um eine kompensierte, flexible Interferenz zu bilden.

2.  Verstärkte abnehmbare Wärmedämmung (ASTI) nach Anspruch 1, **dadurch gekennzeichnet, dass** das Stahlauskleidungsblech mit einer Dicke $S_2$ ausgeführt ist, die das Verhältnis:

$$S2 > \frac{S_1 k_2 d}{k_1 d}$$

erfüllt, wobei:

> d die Teilung der Zelle des Rahmenverstärkungsgitters ist,
> $S_1$ die Dicke des rostfreien Stahls der BSTI-Blockumhüllung ist,
> $S_2$ die Dicke des Edelstahlverkleidungsblechs des ASTI-Blocks ist,
$k_1$ der Koeffizient ist, der die Art der Befestigung der Kante der BSTI-Umhüllungsplatte berücksichtigt,
$k_2$ der Koeffizient ist, der die Art der Befestigung der Kante des ASTI-Verkleidungsblechs berücksichtigt,
D die maximale Größe des BSTI-Blocks ist.

3.  Verstärkte abnehmbare Wärmedämmung (ASTI) nach einem der vorhergehenden Ansprüche, **dadurch gekennzeichnet, dass** das Gitter (1) aus Stäben mit einem Durchmesser von 0,2 - 0,5 mm hergestellt ist.

4.  Verstärkte abnehmbare Wärmedämmung (ASTI) nach einem der vorhergehenden Ansprüche, **dadurch gekennzeichnet, dass** das Gitter (1) aus Stäben (20) mit kreisförmigem Querschnitt oder aus Stäben mit gleichwertiger Festigkeit und einem anderen Profil (21) hergestellt ist.

5.  Verstärkte, abnehmbare Wärmedämmung (ASTI) nach einem der vorhergehenden Ansprüche, **dadurch gekennzeichnet, dass** die Verbindung der Umhüllung zusätzlich mit gestanzten, gewellten Scheiben (4) mit Mulden (8) mit einem konischen Eingang zum Andocken an die Schnittpunkte der Verstärkungsstäbe des Gitters (1) versehen ist, das mit seinen gewellten Scheiben (4) an das dünnwandige Verkleidungsblech (5) aus rostfreiem Stahl durch Kontaktschweißen angebracht ist.

6.  Verstärkte abnehmbare Wärmedämmung (ASTI) nach Anspruch 5, **dadurch gekennzeichnet, dass** die gewellten Scheiben (4) an das dünnwandige Verkleidungsblech (5) aus rostfreiem Stahl durch Kontaktschweißen angebracht sind.

7.  Verstärkte abnehmbare Wärmedämmung (ASTI) nach einem der vorhergehenden Ansprüche, **dadurch gekennzeichnet, dass** das verstärkende Gitter (1) mit dem Verkleidungsblech durch elektrisches Schweißen ohne gewellte Scheiben verbunden ist.

8.  Verstärkte abnehmbare Wärmedämmung (ASTI) nach einem der vorhergehenden Ansprüche, **dadurch gekennzeichnet, dass** das verstärkende Rahmengitter (1) einen verstärkten Abschnitt des Gitterstabs (20) aufweist, der mit der linearen Abmessung parallel zur Achse der zylindrischen Oberfläche der Wärmedämmeinrichtung angeordnet ist und eine feste Verbindung zum Kontakt mit dem Bandstab (22) aufweist.

## Revendications

1. Isolation thermique amovible renforcée (ASTI) contenant des blocs d'isolation thermique d'une isolation thermique amovible modulaire (BSTI) reliés étroitement entre eux par des parois latérales longitudinales et des boîtiers en acier inoxydable remplis d'un matériau d'isolation thermique, les boîtiers étant réalisés sous la forme d'un assemblage comprenant une forte grille formant cadre de renforcement (1) et une feuille de revêtement (5) en acier inoxydable à paroi mince (5), formant ainsi un bloc de l'ASTI, la grille formant cadre de renforcement (1) pouvant être constituée de blocs cellulaires triangulaires, rectangulaires, pentagonaux et hexagonaux, **caractérisée en ce que** les blocs de l'ASTI sont fixés les uns aux autres au moyen de verrous à déclic montés dans les intersections d'angle des bases extérieure et intérieure des blocs ASTI correspondants, et comprenant des pinces portables (10) et des crochets de retenue de pince (12) stationnaires placés à l'intérieur des blocs de l'ASTI, les pinces (10) sont réalisées sous forme de plaques incurvées flexibles élastiquement compressibles de la pince (10), chaque crochet de retenue (12) est réalisé sous forme de parois estampées fixées au cadre du bloc avec des raidisseurs (13) et une plaque en acier inoxydable (14), les parois des crochets de retenue forment des volets (19) dont les plans sont en contact mutuel lorsqu'ils viennent en appui contre la surface des plaques élastiquement compressibles de la pince (10), avec un arrondi placé coaxialement à une ligne de liaisons des angles des parois latérales du bloc, et les pinces (10) sont reliées entre elles par un ressort annulaire (9) qui est fixé aux plaques élastiquement compressibles de la pince (10) et qui les relie symétriquement à l'axe de symétrie des pinces (10) pour former un serrage flexible compensé.

2. Isolation thermique amovible renforcée (ASTI) selon la revendication 1, **caractérisée en ce que** la feuille de revêtement en acier est d'épaisseur S2, respectant le rapport :

$$S2 < \frac{S_1 k_2 d}{k_1 d}$$

où :

d est le pas de la cellule de la grille formant cadre de renforcement,
S1 est l'épaisseur de l'acier inoxydable du boîtier du bloc de BSTI,
S2 est l'épaisseur de la feuille de revêtement en acier inoxydable du bloc de ASTI,
k1 est le coefficient tenant compte de la méthode de fixation du bord de la plaque de boîtier de BSTI,
k2 est le coefficient tenant compte de la méthode de fixation du bord de la feuille de revêtement de ASTI,
D est la taille maximale du bloc de BSTI.

3. Isolation thermique amovible renforcée (ASTI) selon l'une des revendications précédentes, **caractérisée en ce que** la grille (1) est constituée de barres d'un diamètre de 0,2 à 0,5 mm.

4. Isolation thermique renforcée amovible (ASTI) selon l'une des revendications précédentes, **caractérisée en ce que** la grille (1) est constituée de barres (20) de section transversale circulaire ou de barres de résistance équivalente d'un autre profil (21).

5. Isolation thermique amovible renforcée (ASTI) selon l'une des revendications précédentes, **caractérisée en ce que** le raccordement du boîtier est en outre pourvu de rondelles ondulées estampées (4) avec des rainures (8) à entrée conique pour venir en appui contre les intersections des barres de renforcement de la grille (1), qui est soudée par contact à la feuille de revêtement en acier inoxydable à paroi mince (5) avec les arrondis des rondelles ondulées (4).

6. Isolation thermique amovible renforcée (ASTI) selon la revendication 5, **caractérisée en ce que** les rondelles ondulées (4) sont reliées à la feuille de revêtement en acier inoxydable à paroi mince (5) par soudage par contact.

7. Isolation thermique amovible renforcée (ASTI) selon l'une des revendications précédentes, **caractérisée en ce que** la grille de renforcement (1) est reliée à la feuille de revêtement par soudage électrique sans rondelles ondulées.

8. Isolation thermique amovible renforcée (ASTI) selon l'une des revendications précédentes, **caractérisée en ce que** la grille formant cadre de renforcement (1) comprend une portion renforcée de la barre de grille (20) disposée, avec la dimension linéaire, parallèlement à l'axe de la surface cylindrique de l'équipement d'isolation thermique et ayant une connexion fixe pour entrer en contact avec la barre de bande (22).

EP 3 608 579 B1

Fig. 1

9

Fig. 2

Fig. 3

Fig. 4

Fig. 5

A–A

Fig. 6

Fig. 7

Fig. 8

Fig. 9

Fig. 10

Fig. 11

Fig. 12

Fig. 13

View A (enlarged)

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2039829 A
- US 3970210 A
- US 3415408 A
- US 341540 A